# EUROPÄISCHE PATENTANMELDUNG

(11) **EP 4 202 367 A1**
(43) Veröffentlichungstag der Anmeldung: **28.06.2023**
(21) Anmeldenummer: 21216458.6
(22) Anmeldetag: 21.12.2021
(51) Int. Cl.: G01C 21/26, G06Q 10/04, G08G 1/00

(54) **VERFAHREN ZUR RECHNERGESTÜTZTEN STEUERUNG UND/ODER REGELUNG EINES TECHNISCHEN SYSTEMS**

(71) Anmelder: Siemens Aktiengesellschaft, 80333 München (DE)
(72) Erfinder: Eigner, Marion, 80469 München (DE); Hein, Daniel, 81549 München (DE); von Beuningen, Anja, 99085 Erfurt (DE); Hauptmann, Werner, 85635 Höhenkirchen (DE); Pellegrino, Marco, 85591 Vaterstetten (DE); Tokic, Michel, 88069 Tettnang (DE)
(74) Vertreter: Siemens Patent Attorneys

(57) **Zusammenfassung**

Die Erfindung betrifft ein Verfahren zur rechnergestützten Steuerung und/oder Regelung eines technischen Systems, das eine Umgebung eines Straßenverkehrsnetzes, repräsentiert und dessen Verhalten für mehrere Zeitpunkte jeweils durch einen globalen Zustand des techn. Systems und durch eine in diesem Zustand am techn. System durchführbare globale Steuerungsaktion charakterisiert wird, aufweisend folgende Schritte: Empfangen von globalen Zustandsdaten, wobei die globalen Zustandsdaten (GS) einen globalen Zustand der Umgebung mit einer Mehrzahl von richtungsfrei beweglichen Fahrzeuge zu einem Zeitpunkt t beschreiben; Ermitteln eines Satzes von lokalen Zustandsdaten (S1, S2,..., SN) der Mehrzahl von Fahrzeugen basierend auf den globalen Zustandsdaten (GS); Ermitteln eines optimierten Satzes von lokalen Steuerungsaktionen (A1, A2,..., AN) für die Mehrzahl von Fahrzeugen basierend auf dem Satz von lokalen Zustandsdaten durch Ausführen zumindest einer vorgebbaren oder vorgegebenen Aktionsauswahlregel (P) auf die lokalen Zustandsdaten, wobei lokale Steuerungsaktionen eines Fahrzeugs eine individuelle Ansteuerung des jeweiligen Fahrzeugs beschreiben; Generieren von globalen Steuerungsdaten (GA) für eine globale Steuerungsaktion, welche basierend auf dem optimierten Satz von lokalen Steuerungsaktionen und unter Berücksichtigung wenigstens eines in Hinblick auf die Umgebung gerichteten Optimierungsziels ermittelt wird; und Bereitstellen der globalen Steuerungsdaten am techn. System zur Ausführung der Steuerung bzw. Regelung, wobei die Steuerung bzw. Regelung in Abhängigkeit vom globalen Zustand des techn. Systems zum Zeitpunkt t die nachfolgend am technischen System durchzuführende globale Steuerungsaktion angibt und die Durchführung dieser globalen Steuerungsaktion in einen geänderten globalen Zustand des technischen Systems zu einem nachfolgenden Zeitpunkt t+1 führt.

## Beschreibung

Verfahren zur rechnergestützten Steuerung und/oder Regelung eines technischen Systems

Die Erfindung betrifft ein Verfahren und eine Anordnung zur rechnergestützten Steuerung und/oder Regelung eines technischen Systems sowie ein zugehöriges Computerprogrammprodukt.

Ein technisches System kann insbesondere eine Umgebung eines Straßenverkehrsnetzes sein. Dabei kann das Straßenverkehrsnetz mit seinen Straßen Örtlichkeiten bzw. Zielpositionen innerhalb einer Stadt, Orte bzw. Zielpositionen innerhalb einer Region oder auch Fertigungsstationen innerhalb einer Fabrik oder zwischen verschiedenen Fabrikstandorten miteinander verbinden. Auf solchen Straßen bewegen sich in der Regel mehrere richtungsfrei bewegliche Fahrzeuge, die für das Fahren auf der Straße geeignet sind und ggf. als Transportmittel für Personen- oder Sachtransporte genutzt werden können. Unter richtungsfrei kann in diesem Zusammenhang verstanden werden, dass die Fahrzeuge beliebig ihre Richtung im Gegensatz zu beispielsweise einem Schienenfahrzeug ändern können. Im Gegensatz zu einem Schienenfahrzeug können sie z.B. an einer Kreuzung abbiegen oder auch einem Hindernis ausweichen.

Die Betreiber von Personen- oder Sachtransporten haben ein hohes Interesse daran, ihre Abläufe zu optimieren. Zu solchen Betreibern zählen beispielsweise Inhaber von Lieferservices, Krankentransportunternehmen, Taxiunternehmen oder Fabrikanten (Material- und Werkstücktransport zwischen Fertigungsanlagen innerhalb einer Fabrik oder zwischen Standorten). Die Optimierung von Personen- oder Sachtransporten unter Berücksichtigung von voroptimierten Routen ist mit steigender Anzahl an bedarfsgesteuerten Transporten, einer steigenden Anzahl von möglichen Transportmitteln bzw. Fahrzeugen (z.B. Fahrräder, PKW, Elektrofahrzeuge, autonome Fahrzeuge, Autonomous Guided Vehicles (AGVs), etc.) und unter Berücksichtigung lokaler Verfügbarkeit der Transportmittel und Straßenverkehrsnetzgegebenheiten (z.B. mögliche Wege/Routen im Straßennetz, Mautsysteme, EV-Ladestationen, etc.) für die Transporte ein sehr komplex zu lösendes Optimierungsproblem.

Aus DE 10 2018 204 544 A1 ist beispielsweise eine Vorrichtung und ein Verfahren zur Ermittlung einer optimalen intermodalen Route von einer Ausgangsposition zu einer Zielposition unter Nutzung von modalen Routenplanungsdiensten bekannt. Hierbei werden modale Routenplanungsdienste für Teilrouten abgefragt und mit Hilfe eines intermodalen Routenplaners eine optimale Gesamtroute aus den Teilrouten gefunden. Dabei kann auf der Gesamtroute das Verkehrsmittel gewechselt werden.

Eine Routenplanung wird in der Regel vor Fahrtbeginn für den einzelnen individuellen Verkehrsteilnehmer und das jeweilige Transportmittel durchgeführt.

Anschließend ist es möglich, während der Fahrt eine dynamischen Routenoptimierung (dynamische Navigation) auf Basis von lokalen Informationen, globalen Daten (z.B. TMC, Verkehrsleitzentralen, Mobilfunk-Provider, Flotteninformationen, etc.) zur Berücksichtigung der aktuellen Verkehrssituation (z.B. Staus, Unfälle, Straßensperrungen, etc.) und einer Verkehrsprognose durchzuführen.

Die Lösung dieses Optimierungsproblems hinsichtlich übergeordneter Ziele für das gesamte Verkehrsnetz und dessen Umgebung (z.B. Stadt, Fertigungsstätte, etc.) benötigt große Rechenaufwände.

Die Aufgabe der Erfindung besteht darin, ein gegenüber des eingangs genannten Standes der Technik verbessertes Verfahren sowie eine verbesserte Anordnung bzw. (Steuerungs-)Vorrichtung zur Durchführung des Verfahrens anzugeben. Diese Aufgabe wird durch die unabhängigen Ansprüche gelöst. Vorteilhafte Weiterbildungen sind Gegenstand der abhängigen Ansprüche.

Die Erfindung beansprucht ein Verfahren zur rechnergestützten Steuerung und/oder Regelung eines technischen Systems, das eine Umgebung eines Straßenverkehrsnetzes, in welcher sich mindestens zwei richtungsfrei bewegliche Fahrzeuge befinden, repräsentiert und dessen Verhalten für mehrere Zeitpunkte jeweils durch einen globalen Zustand des technischen Systems und durch eine in diesem Zustand am technischen System durchführbare globale Steuerungsaktion charakterisiert wird, wobei jeder Zustand durch Zustandsdaten beschrieben wird, aufweisend folgender Verfahrensschritte:
- Empfangen von globalen Zustandsdaten, wobei die globalen Zustandsdaten einen globalen Zustand der Umgebung mit einer Mehrzahl solcher Fahrzeuge zu einem Zeitpunkt t beschreiben;
- Ermitteln eines Satzes von lokalen Zustandsdaten der Mehrzahl von Fahrzeugen basierend auf den globalen Zustandsdaten (GS), wobei lokale Zustandsdaten eines Fahrzeugs einen Zustand des Fahrzeugs innerhalb der Umgebung beschreiben;
- Ermitteln eines optimierten Satzes von lokalen Steuerungsaktionen für die Mehrzahl von Fahrzeugen basierend auf dem Satz von lokalen Zustandsdaten der Mehrzahl von Fahrzeugen durch Ausführen zumindest einer vorgebbaren oder vorgegebenen Aktionsauswahlregel auf die lokalen Zustandsdaten, wobei lokale Steuerungsaktionen eines Fahrzeugs eine individuelle Ansteuerung des jeweiligen Fahrzeugs beschreiben;
- Generieren von globalen Steuerungsdaten für eine globale Steuerungsaktion, welche basierend auf dem optimierten Satz von lokalen Steuerungsaktionen und unter Berücksichtigung wenigstens eines in Hinblick auf die Umgebung gerichteten Optimierungsziels ermittelt wird; und
- Bereitstellen der globalen Steuerungsdaten am technischen System zur Ausführung der Steuerung und/oder Regelung, wobei die Steuerung und/oder Regelung in Abhängigkeit vom globalen Zustand des technischen Systems zum Zeitpunkt t die nachfolgend am technischen System durchzuführende globale Steuerungsaktion angibt und die Durchführung dieser globalen Steuerungsaktion in einen geänderten globalen Zustand des technischen Systems zu einem nachfolgenden Zeitpunkt t+1 führt und eine Annäherung an das wenigstens eine Optimierungsziel oder dessen Erfüllung bewirkt.

Das obige Verfahren kann beliebig oft iteriert werden.

Die globalen Steuerungsdaten können den optimierten Satz von lokalen Steuerungsaktionen vollständig oder teilweise umfassen.

Das technische System kann dabei als datengetriebenes Modell des technischen Systems und/oder ein physikalisches System sein.

Das datengetriebene Modell kann ein das technische System nachbildendes Simulationsmodell sein, welches auf Basis von Daten von bekannten realen oder simulierten zeitlichen Sequenzen von globalen Steuerungsaktionen mit bekannten daraus resultierenden globalen Zuständen des technischen Systems beispielsweise mit heuristischen Verfahren modelliert und/oder mit Hilfe eines neuronalen Netzes angelernt ist.

Als neuronales Netz können z.B. ein rekurrentes Neuronales Netz, Convolutional Neural Network (CNN) oder Temporal Coherent CNNs genutzt werden.

Das Training des neuronalen Netzes (NN) erfolgt vorzugsweise mittels eines Verfahrens des maschinellen bestärkenden Lernens. Unter einem Training sei hierbei allgemein eine Optimierung einer Abbildung von Eingabedaten eines neuronalen Netzes, auf Ausgabedaten, verstanden. Diese Abbildung wird nach vorgegebenen, gelernten und/oder zu lernenden Kriterien während einer Trainingsphase optimiert. Als Kriterien können hierbei z. B. bei Steuerungsmodellen ein (Prädiktions-)Erfolg einer Steueraktion herangezogen werden.

Durch das Training können beispielsweise Vernetzungsstrukturen von Neuronen des neuronalen Netzes und/oder Gewichte von Verbindungen zwischen den Neuronen so eingestellt bzw. optimiert werden, dass die vorgegebenen Kriterien möglichst gut erfüllt werden. Das Training kann somit als Optimierungsproblem aufgefasst werden. Für derartige Optimierungsprobleme auf dem Gebiet des maschinellen Lernens sind eine Vielzahl von effizienten Optimierungsverfahren verfügbar.

Die Ausgabedaten des neuronalen Netzes können in das Simulationsmodell als Simulationseingabedaten eingespeist werden und die Verfahrensschritte gegebenenfalls wiederholt werden.

Die vorgebbare oder vorgegebene Aktionsauswahlregel kann auf Basis von Daten von bekannten realen oder simulierten zeitlichen Sequenzen von globalen Steuerungsaktionen mit bekannten daraus resultierenden globalen Zuständen des technischen Systems mit Hilfe von Techniken des bestärkenden Lernens trainiert werden oder trainiert sein. Das Training der Aktionsauswahlregel kann eine Optimierung einer Belohnungsfunktion umfassen, wobei der Wert der Belohnungsfunktion den Grad des Erreichens des zugehörigen Optimierungsziels ausdrückt.

Im Gegensatz zu einer Online-Optimierung von Fahrten-, Flotten- und Verkehrsplänen gemäß dem Stand der Technik werden mit der zugrundeliegenden Erfindung vorab, auf Basis von modellierten Flotten- und Verkehrsnetzszenarios, Parameter zur lokalen Fahrtenoptimierung erlernt, die es den lokalen Transportmitteln bzw. Fahrzeugen erlauben, vorzugsweise Offline-Entscheidungen bzgl. ihrer Fahrtenplanung unter Berücksichtigung übergeordneter Flotten- und Verkehrsnetzoptimierungsziele zu treffen. Die Abstraktion von verschiedenen Fahrzeugtypen zu generellen Fahrzeugen bzw. Transportmitteln erlaubt zudem einen generalisierten Ansatz, der sich für verschiedene Transportmittel anwenden lässt, die die Eigenschaften haben, eigenständig gewählte Routen zu verfolgen.

Die gemeinsame Aktionsauswahlregel, welche einmal gelernt oder modelliert und auf alle Transportmittel angewendet wird, ermöglicht es, die Methode auf eine Fahrzeugflotte unabhängig von der Größe der Fahrzeugflotte, des Verkehrsnetzes oder der Anzahl der Transportaufträge anzuwenden. Es muss keine erneute rechenintensive Optimierung für jeden neuen Transportauftrag berechnet werden, sondern lediglich eine durch Modellierung oder Training vorgegebene Aktionsauswahlregel ausgewertet werden.

Durch die gemeinsame Aktionsauswahlregel werden deutlich weniger Daten für das Training benötigt als bei der Nutzung individualisierter Aktionsauswahlregeln pro Transportauftrag. Diese Lösung ist zudem robust, da jedes Fahrzeug zur Aktionsauswahlregel beiträgt und damit viele verschiedene Situationen in die Modellierung bzw. das Training der Aktionsauswahlregel einfließen.

Ein weiterer Aspekt der Erfindung sieht eine Vorrichtung mit einer Recheneinheit zur Steuerung und/oder Regelung eines technischen Systems vor, das eine Umgebung eines Straßenverkehrsnetzes mit mindestens zwei sich richtungsfrei beweglichen Fahrzeugen repräsentiert und dessen Verhalten für mehrere Zeitpunkte jeweils durch einen globalen Zustand des technischen Systems und durch eine in diesem Zustand am technischen System durchführbare globale Steuerungsaktion charakterisiert ist, wobei jeder Zustand durch Zustandsdaten beschrieben ist, wobei die Recheneinheit dazu eingerichtet ist, die folgenden Verfahrensschritte auszuführen:
- Empfangen von globalen Zustandsdaten, wobei die globalen Zustandsdaten einen globalen Zustand der Umgebung mit einer Mehrzahl solcher Fahrzeuge zu einem Zeitpunkt t beschreiben;
- Ermitteln eines Satzes von lokalen Zustandsdaten der Mehrzahl von Fahrzeugen basierend auf den globalen Zustandsdaten, wobei lokale Zustandsdaten eines Fahrzeugs einen Zustand des Fahrzeugs innerhalb der Umgebung beschreiben;
- Ermitteln eines optimierten Satzes von lokalen Steuerungsaktionen für die Mehrzahl von Fahrzeugen basierend auf dem Satz von lokalen Zustandsdaten der Mehrzahl von Fahrzeugen durch Ausführen zumindest einer vorgebbaren oder vorgegebenen Aktionsauswahlregel auf die lokalen Zustandsdaten, wobei lokale Steuerungsaktionen eines Fahrzeugs eine individuelle Ansteuerung des jeweiligen Fahrzeugs beschreiben;
- Generieren von globalen Steuerungsdaten für eine globale Steuerungsaktion, welche basierend auf dem optimierten Satz von lokalen Steuerungsaktionen und unter Berücksichtigung wenigstens eines in Hinblick auf die Umgebung gerichteten Optimierungsziels ermittelt wird; und
- Bereitstellen der globalen Steuerungsdaten am technischen System zur Ausführung der Steuerung und/oder Regelung, wobei die Steuerung und/oder Regelung in Abhängigkeit vom globalen Zustand des technischen Systems zum Zeitpunkt t die nachfolgend am technischen System durchzuführende globale Steuerungsaktion angibt und die Durchführung dieser globalen Steuerungsaktion in einen geänderten globalen Zustand des technischen Systems zu einem nachfolgenden Zeitpunkt t+1 führt und eine Annäherung an das wenigstens eine Optimierungsziels oder dessen Erfüllung bewirkt.

Ein weiterer Aspekt sieht eine Vorrichtung mit einer Recheneinheit zum Trainieren zumindest einer vorgebbaren oder vorgegebenen Aktionsauswahlregel, wobei das technische System eine Umgebung eines Straßenverkehrsnetzes, in welcher sich mindestens zwei richtungsfrei bewegliche Fahrzeuge befinden, repräsentiert und dessen Verhalten für mehrere Zeitpunkte jeweils durch einen globalen Zustand des technischen Systems und durch eine in diesem Zustand am technischen System durchführbare globale Steuerungsaktion charakterisiert ist, wobei jeder Zustand durch Zustandsdaten beschrieben ist, wobei die Recheneinheit dazu eingerichtet ist, die folgenden Verfahrensschritte auszuführen:
- Trainieren der Aktionsauswahlregel auf Basis von Daten von realen oder simulierten zeitlichen Sequenzen von globalen Steuerungsaktionen mit bekannten daraus resultierenden globalen Zuständen des technischen Systems mit Hilfe von Techniken des bestärkenden Lernens, das eine Optimierung einer Belohnungsfunktion unter Berücksichtigung wenigstens eines in Hinblick auf die Umgebung gerichteten Optimierungsziels umfasst.

Beansprucht wird ferner eine Anordnung zur rechnergestützten Steuerung und/oder Regelung eines technischen Systems, das eine Umgebung eines Straßenverkehrsnetzes mit mindestens zwei sich richtungsfrei beweglichen Fahrzeugen repräsentiert, umfassend die vorgenannten Vorrichtungen, welche derart zusammenwirken können, dass globale Steuerungsdaten am technischen System zur Ausführung der Steuerung und/oder Regelung bereitgestellt werden können, welche durch ihre Anwendung in einen geänderten globalen Zustand des technischen Systems führen und eine Annäherung an das wenigstens eine Optimierungsziels oder dessen Erfüllung bewirken können.

Die Module bzw. Einheiten bzw. die Vorrichtung, die dazu eingerichtet sind, solche Verfahrensschritte auszuführen, können hardware-, firmware- und/oder softwaremäßig implementiert sein.

Ein weiterer Aspekt der Erfindung ist ein Computerprogramm(-produkt) mit Programmcodemitteln zur Durchführung des Verfahrens nach einem der oben erwähnten Ausführungsformen, wenn es in einer Anordnung der oben genannten Art bzw. verteilt auf den Vorrichtungen der oben genannten Art abläuft oder auf einem computerlesbaren Speichermedium gespeichert ist.

Das Computerprogramm bzw. -produkt kann auf einem computerlesbaren Speichermedium gespeichert sein. Das Computerprogramm bzw. -produkt kann in einer üblichen Programmiersprache (z.B. C++, Java) erstellt sein. Die Verarbeitungseinrichtung kann einen marktüblichen Computer oder Server mit entsprechenden Eingabe-, Ausgabe- und Speichermitteln umfassen. Diese Verarbeitungseinrichtung kann in der Vorrichtung oder in deren Mitteln integriert sein.

Die Anordnung, die Vorrichtungen sowie das Computerprogramm(-produkt) können analog zum oben genannten Verfahren und dessen Weiterbildungen weiter- bzw. ausgebildet sein.

Weitere Vorteile, Einzelheiten und Weiterbildungen der Erfindung ergeben sich aus der nachfolgenden Beschreibung von Ausführungsbeispielen in Verbindung mit den Zeichnungen.
Figur 1 zeigt beispielhaft eine Straßenverkehrsszene, und
Figur 2 zeigt eine schematische Abbildung einer Anordnung zur rechnergestützten Steuerung und/oder Regelung eines technischen Systems.

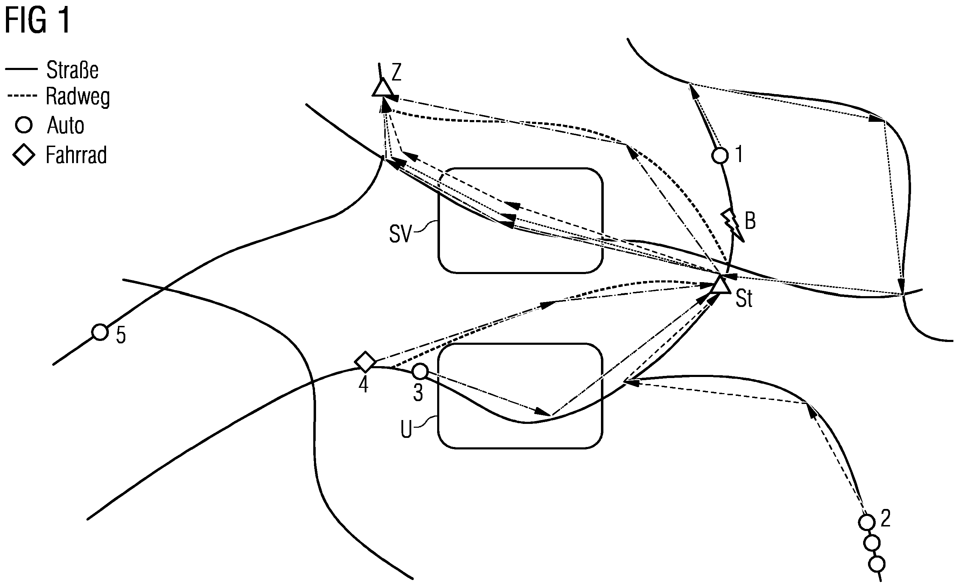

Figur 1 zeigt beispielhaft eine Straßenverkehrsszene.

Die schwarzen durchgezogenen Linien repräsentieren Straßen, die auch Fahrradwege umfassen können. Fahrradwege, die mit ungerichteten gestrichelten Linien gekennzeichnet sind, werden im Beispiel Straßen gleichgesetzt. Die zu transportierende Sache befindet sich beim Start St und soll möglichst schnell zum Ziel Z gebracht werden, wobei auch andere Optimierungsziele denkbar sind (z.B. Komfort des Transportes, Umweltfreundlichkeit, Lärmbelastung, Energieeinsparung, etc.). Die Transportmittel bzw. Fahrzeuge sind mit Kreisen für Autos bzw. PKWs und Rauten für Fahrräder gekennzeichnet. Es sind auch andere Fahrzeuge wie LKW, Motorrad etc. denkbar. Es gibt zudem Bereiche, in denen beispielsweise der Verkehr aufgrund eines Staus SV langsamer fließt als auf anderen Straßen. Zusätzlich kann es Routen bzw. Wege z.B. durch Umweltzonen oder Spielstraßen geben, auf denen gewisse Fahrzeuge wie z.B. Fahrräder bevorzugt werden. Es muss nun entschieden werden, welches Fahrzeug oder welche Fahrzeuge, gekennzeichnet mit den Zahlen 1 bis 5, die Transportaufgabe eines an einen Betreiber gestellten Transportauftrags übernimmt/übernehmen und die Sache oder Person vom Start zum Ziel befördert/befördern.

Jedes Fahrzeug, auch Agent genannt, besitzt einen Zustand, welcher den aktuellen Zustand des Fahrzeuges beschreibt (siehe untenstehende Tabelle). Hierzu können u.a. folgende Zustandsvariablen gehören:
- Benötigte Zeit zum Startpunkt
- Benötigte Zeit vom Start zum Ziel
- Klimafreundlichkeit, z.B. in Form von CO2-Ausstoß
- Dichte weiterer Service-Fahrzeuge in der näheren Umgebung
- Zuverlässigkeit des Fahrzeugs oder des Fahrers in Bezug auf die Ausführung der Transportaufgabe
- Bonus, der von der Umgebung vergeben wird. Im Beispiel ist die Umgebung ein Straßenverkehrssystem einer Stadt mit einem Bonus vergeben, wenn der Transport Vorgaben der Stadt erfüllt wie z.B. eine geringere Emission von Schadstoffen zu bestimmten Tageszeiten.

| Beispiele Zustandsvariablen | Zustand_1 | Zustand_2 | Zustand_3 | Zustand_4 | Zustand_5 |
|---|---|---|---|---|---|
| Zeit zu Start | **20** | 15 | 8 | *10* | **33** |
| Zeit zum Ziel | **21** | **21** | **21** | 18 | **21** |
| CO₂ | 82 | **113** | *19* | *0* | **150** |
| Service-Dichte | **1** | *3* | *2* | 2 | **1** |
| Zuverlässigkeit | *0,9* | **0,5** | *0,9* | 0,8 | 0,8 |
| Stadt-Bonus | 0 | 0 | **-1** | *1* | 0 |
| Policy-Ergebnis | 0,7 | 0, 8 | 0,9 | *0,95* | 0,4 |

Agenten:
Auto 1:
   - **Durch Unfall blockiert (Umweg zum Start)**
   - **Stau zwischen Start und Ziel**
   - **Niedrige Ride-Dichte**
   - *Sehr zuverlässig*
Auto 2:
   - **Stau zwischen Start und Ziel**
   - **Sehr hoher CO₂-Ausstoß**
   - *Hohe Ride-Dichte*
   - **Unzuverlässiger Fahrer**
Auto 3:
   - *Kurze Fahrtzeit zum Start*
   - **Stau zwischen Start und Ziel**
   - *Niedriger CO₂-Ausstoß*
   - *Sehr zuverlässig*
   - **Umweltzone muss durchfahren werden**
Fahrrad 4:
   - *Kurze Fahrtzeit zum Start*
   - *Kein CO₂-Ausstoß*
   - *Keine Auswirkung auf Umweltzone*
Auto 5:
   - **Weit entfernt vom Ziel.**
   - **Stau zwischen Start und Ziel**

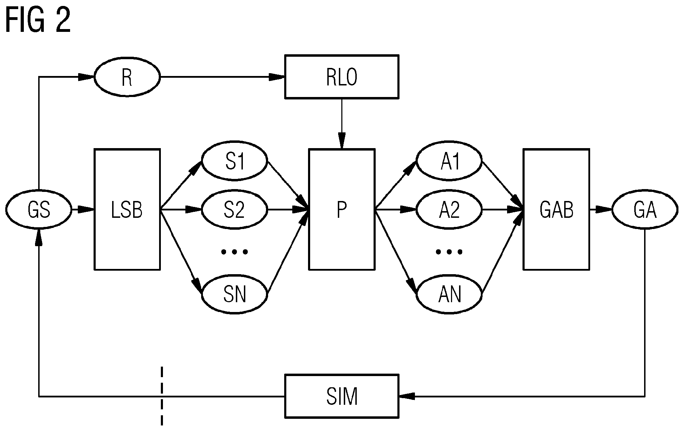

Wenn man in der Tabelle beispielsweise Zustand_4 betrachtet ist der Zustand von Fahrrad 4 zu sehen. Alle "kursiv" gedruckten Werte bedeuten gute Werte, die bevorzugt werden. Alle "fett" gedruckten Werte bedeuten ungünstige Werte, die nachgeordnet berücksichtigt werden. Das Fahrrad hat hierbei gute Werte bei: eine kurze Zeitdauer zum Start, keinen CO2-Ausstoß und einen Stadtbonus, da es keine Emissionen in der Umweltzone verursacht. Auto 5 hat demgegenüber ungünstigere Werte: lange Zeitdauer zum Start, es gibt wohl eine erhöhte Staugefahr und tatsächliche Staus auf dem Weg zum Ziel, der CO2-Ausstoß ist enorm und die Service-Dichte in der näheren Umgebung ist auch niedrig. Mit Hilfe einer Aktionsauswahlregel P, die nachfolgend zu Figur 2 näher erläutert wird, wird zu jedem Zustandsvektor (im Beispiel von Zustand_1, Zustand_2, Zustand_3, Zustand_4, Zustand_5) ein Policy-Ergebnis (Policy ist der englische Ausdruck für Regel) ermittelt. Wenn ein Optimierungsziel sich dadurch ausdrückt, dass der Maximalwert der ermittelten Policy-Ergebniswerte für die obige Entscheidung herangezogen werden soll, dann übernimmt im Beispiel das Fahrrad 5 mit dem höchsten Policy-Ergebnis von 0.95 den Transportauftrag und soll als Steuerungsaktion vom Ziel zum Start bewegt werden. Dieser Transportauftrag kann weitere Steuerungsaktionen nach sich ziehen, z.B. dass die in der Nähe von Fahrzeug 2 angeordneten Fahrzeuge zu anderen Standorten gebracht werden sollen, um eine möglichst gute Verteilung der zur Verfügung stehenden Fahrzeuge zu erreichen. Fahrzeug 5 hat im Beispiel den niedrigsten Policy-Ergebnis Wert. Auch hier ist es denkbar, dass als Steuerungsaktion dieses Fahrzeug an einen anderen Standort verlegt werden soll. Letztendlich werden die Fahrzeuge angesteuert, so dass sie sich tatsächlich zum gewünschten Ziel bewegen. Dies führt dann in der Realität oder aber auch in einer die Verkehrsszene nachbildenden Simulation zu einer Zustandsänderung der betroffenen Fahrzeuge. Die Policy-Ergebniswerte können im Beispiel eine Belohnungsfunktion ausdrücken. Wenn wie unten zu Figur 2 beschrieben, die Aktionsauswahlregel mittels bestärkenden Lernens trainiert wird, dann wird nach einer Zustandsänderung in der gesamten Verkehrsszene eine Rückmeldung geliefert, die sich auf die Einstellung der Aktionsauswahlregel auswirken kann.

Es ist möglich, dass innerhalb einer Route vom Start zum Ziel die Art des Fahrzeugs gewechselt wird (multimodaler Verkehr, z.B. von PKW auf Fahrrad). Zudem kann sich die Verkehrsszene statt im öffentlichen Straßenverkehr analog auch innerhalb eines Fabrikgebäudes abspielen, wobei AGVs die zur Verfügung stehenden Fahrzeuge repräsentieren, die Fertigungsgut von einer Fertigungsstation zu einer anderen transportieren.

Um die gestellte Transportaufgabe zu lösen kann ein bestärkendes Lernen, auch Reinforcement Learning (RL) genannt, eingesetzt werden. Typischerweise repräsentiert beim RL - ein Environment die aktuelle Umgebung des Straßenverkehrsnetzes, in welcher die Agenten sich bewegen. Von dieser Umgebung können die Agenten Beobachtungen erhalten (z.B. Karteninformationen, Wegenetz, Position, Wetter, Informationen über den aktuellen Verkehrsfluss, Verkehrsprognose, blockierte Wege, Ziele, Uhrzeit, etc.). - Ein Agent repräsentiert hierbei ein einzelnes Transportmittel (z.B. einzelner PKW, ein bestimmtes Fahrrad, Elektroroller, ein AGV, etc.), der mit der Umgebung interagieren kann, indem sie Beobachtungen vom Environment erhalten, auswerten und über Steuerungsaktionen (z.B. Bewegung an einen anderen Ort, Aufnahme eines Transportgutes, Abgabe eines Transportgutes, Starten eines Batterieladevorgangs, etc.) mit der Umgebung interagieren.

Figur 2 zeigt eine Mehrzahl verschiedener Komponenten einer Anordnung. Das Zusammenwirken der gezeigten Komponenten ist geeignet, das erfindungsgemäße Verfahren zur Steuerung und/oder Regelung eines technischen Systems auszuführen. Das technische System ist im Beispiel eine Umgebung eines Straßenverkehrsnetzes mit mindestens zwei sich richtungsfrei beweglichen Fahrzeugen, wie eingangs und zur Figur 1 beschrieben.

Hierzu werden zunächst von einem Straßenverkehr globale Zustandsdaten GS empfangen. Der Straßenverkehr beschreibt hierbei eine Mehrzahl innerhalb eines Straßenverkehrsnetzes befindlicher Fahrzeuge unter Berücksichtigung der individuellen Eigenschaften des jeweiligen Straßenverkehrsnetzes, der individuellen Eigenschaften der Fahrzeuge, wie auch voroptimierte Routen für die Mehrzahl der Fahrzeuge, die Optimierungsziele wie Schnelligkeit, Klima-/Umweltfreundlichkeit etc.

Die globalen Zustandsdaten GS beschreiben einen Zustand des Straßenverkehrs, der beispielsweise durch eine Verkehrssituation einer Mehrzahl verschiedener Fahrzeuge zu einem vorbestimmten Zeitpunkt t beschrieben wird. Die globalen Zustandsdaten GS können neben detaillierten Zustandsbeschreibungen der einzelnen in der jeweiligen Verkehrssituation des Straßenverkehrs beteiligten Fahrzeuge weitere Informationen beispielsweise bzgl. der benötigten Zeit zum Ziel, bzgl. verschiedener Zustände (z.B. Stau) einzelner Wege des Straßenverkehrsnetzes und weitere relevante Informationen zur Steuerung der Mehrzahl von Fahrzeugen bzw. zur Beschreibung der jeweiligen Verkehrssituation bzw. des Zustands des Straßenverkehrs.

Für verschiedene Verkehrssituationen, in denen beispielsweise eine unterschiedliche Anzahl von Fahrzeugen beteiligt sind, beispielsweise aufgrund der Tages- oder Jahreszeit, in deren Abhängigkeit gemäß der Zeit zur Beförderung beispielsweise von Sachen eine unterschiedliche Anzahl von Fahrzeugen benötigt werden, kann die Datenstruktur der globalen Zustandsdaten GS variieren.

Zum Ausgleich der variierenden Datenstruktur der globalen Zustandsdaten GS, in denen beispielsweise zu Tageszeiten eine hohe Anzahl von Fahrzeugen im Straßenverkehrsnetz mit einer gleichmäßigen Verteilung über das Straßenverkehrsnetz zur Verfügung stehen, über entsprechende Zustandsdaten berücksichtigt sind, während zu Tageszeiten mit lediglich einer geringen Anzahl an verteilten Fahrzeugen in den globalen Zustandsdaten GS entsprechend eine geringe Anzahl von Fahrzeugen mit entsprechenden Zustandsbeschreibungen berücksichtigt sind, werden lokale Zustandsdaten S1, S2, ..., SN der einzelnen Fahrzeuge durch ein Generierungsmodul für lokale Zustandsdaten LSB aus den globalen Zustandsdaten GS generiert. Die lokalen Zustandsdaten S1, S2, ..., SN beschreiben hierbei individuell die Zustände der einzelnen Fahrzeuge des Straßenverkehrs.

Die Datenstruktur der einzelnen lokalen Zustandsdaten S1, S2, ..., SN kann hierbei für verschiedene Fahrzeuge einheitlich ausgestaltet sein, so dass in den einzelnen lokalen Zustandsdaten S1, S2, ..., SN der verschiedenen Fahrzeuge die jeweiligen Zustände der einzelnen Fahrzeuge unter Berücksichtigung der gleichen Zustandsvariablen beschrieben sind. Die lokalen Zustandsdaten S1, S2, ..., SN können beispielsweise Werte für die in obiger Tabelle aufgeführten Zustandsvariablen und/oder weitere fahrzeugspezifische Informationen umfassen. Dabei ist es sinnvoll, dass die Anzahl der Zustandsvariablen für jeden den Zustand eines Fahrzeugs beschreibenden Zustandsvektor gleich ist.

Darüber hinaus können die lokalen Zustandsdaten eines Fahrzeugs zusätzliche Informationen bzgl. weiterer auf den durch das Fahrzeug befahrenen Wegs angeordnete Fahrzeuge inklusive derer Zustandsvariablen umfassen.

In einem folgenden Schritt wird auf die Mehrzahl der generierten lokalen Zustandsdaten S1, S2, ..., SN eine Aktionsauswahlregel P angewendet, die eingerichtet ist, für jedes Fahrzeug individuell basierend auf den jeweiligen lokalen Zustandsdaten S1, S2, ..., SN des jeweiligen Fahrzeugs unter Berücksichtigung wenigstens eines Optimierungsziels (z.B. schnelle Ankunft am Ziel) entsprechende lokale Steuerungsaktionen A1, A2, ..., AN des jeweiligen Fahrzeugs zu generieren. Die lokalen Steuerungsaktionen A1, A2, ..., AN sind dabei derart ausgebildet, dass bei Ausführung der lokalen Steuerungsaktionen A1, A2, ..., AN durch das jeweilige Fahrzeug dieses innerhalb des Straßenverkehrsnetzes derart ansteuerbar ist, dass das jeweilige Optimierungsziel in Hinblick auf die Umgebung des Straßenverkehrsnetzes, das eine Regelung und/oder Steuerung zumindest von Teilen des Straßenverkehrs umfasst, erreichbar ist.

Die lokalen Steuerungsaktionen A1, A2, ..., AN wie z.B. Bewegung des Fahrzeugs an einen anderen Ort, Stoppen/Verbleiben an einem bestimmten Ort können Ankunftszeiten an einem bestimmten Ort, Zeiten für das Beladen eines Fahrzeuges mit einer Transportsache, Fahrtdauer von einem Ort zum anderen Standzeiten (z.B. eines Taxis oder Carsharing-Fahrzeugs), Kraftstoffverbrauch, Zeiten für das Laden einer Batterie des jeweiligen Fahrzeugs berücksichtigen. Durch Ausführung der lokalen Steuerungsaktionen A1, A2, ..., AN durch das jeweilige Fahrzeug wird erreicht, dass schließlich das oder die jeweiligen Fahrzeuge für einen Sach- bzw. Personentransport mittels der globalen Steuerungsaktion ausgewählt werden, die das Optimierungsziel, z.B. schneller Transport vom Start zum Ziel, annähernd oder vollständig erreicht werden.

Das hierdurch zu erreichende Optimierungsziel in Hinblick auf die Umgebung des Straßenverkehrsnetzes kann alternativ oder zusätzlich beispielsweise eine Reduzierung einer Gesamtluftverschmutzung bzw. Gesamtlärmbelästigung der Mehrzahl von in der jeweiligen Verkehrssituation beteiligten Fahrzeugen relativ zur vorbestimmten optimierten Route umfassen. Alternativ oder zusätzlich kann das Optimierungsziel eine Varianz einer Mehrzahl individueller Verzögerungen (z.B. durch Staus) einzelner Fahrzeuge der Mehrzahl der Fahrzeuge des Straßenverkehrs relativ zur optimierten Route umfassen. Alternativ oder zusätzlich hierzu kann das Optimierungsziel ferner einen Energiebedarf der Mehrzahl der Fahrzeuge, beispielsweise einen Gesamtenergieverbrauch und/oder zeitlich begrenzte Maximalwerte des Energieverbrauchs der Mehrzahl von Fahrzeugen umfassen. Alternativ hierzu können auch mehrere verschiedene Optimierungsziele zur Steuerung und/ oder Regelung zumindest eines Teils des Straßenverkehrs berücksichtigt werden.

In einem weiteren Schritt werden darauffolgend durch ein Generierungsmodul für globale Steuerungsdaten GAB basierend auf der Mehrzahl von lokalen Steuerungsaktionen A1, A2, ..., AN der Mehrzahl von Fahrzeugen globale Steuerungsdaten GA generiert. Die globalen Steuerungsdaten GA können hierbei die Mehrzahl von lokalen Steuerungsaktionen A1, A2, ..., AN umfassen und sind dazu eingerichtet, durch Ausführung der in den globalen Steuerungsdaten GA enthaltene lokale Steuerungsaktionen A1, A2, ..., AN durch die Mehrzahl von Fahrzeugen den Verkehr der Mehrzahl der Fahrzeuge in Bezug auf das jeweilige Optimierungsziel zu optimieren. Beispielsweise können die einzelnen Fahrzeuge durch ihre jeweilige lokale Steuerungsaktion "Fahre vom aktuellen Standort zu einem anderen Standort" so auf verschiedene Orte im Straßenverkehrsnetz verteilt werden, dass bei einem Transportauftrag und gegebenenfalls folgenden weiteren Transportaufträgen die Fahrzeuge optimal zur Verfügung stehen, um die Auswahl des Fahrzeugs, das den Transportauftrag am besten in Hinblick auf das Optimierungsziel erfüllen kann, treffen zu können. Im Beispiel entspricht die Auswahl der Fahrzeuge einer in den globalen Steuerungsdaten enthaltenen globalen Steuerungsaktion.

Basierend auf den globalen Zustandsdaten GS des Straßenverkehrs, die die Gesamtheit des Straßenverkehrsnetzes inklusive aller hieran beteiligten Fahrzeuge beschreiben, werden individuelle, lokale Zustandsdaten S1, S2, ..., SN der Mehrzahl von Fahrzeugen ermittelt. Unter Berücksichtigung zumindest eines Optimierungsziels werden daraufhin durch die Aktionsauswahlregel P individuell für jedes Fahrzeug basierend auf den jeweiligen lokalen Zustandsdaten S1, S2, ..., SN des Fahrzeugs entsprechend lokale Steuerungsaktionen A1, A2, ..., AN generiert. Die lokalen Steuerungsaktionen A1, A2, ..., AN können durch das Ansteuern des jeweiligen Fahrzeugs z.B. durch Bewegung des Fahrzeugs an einen anderen Ort, Stoppen/Verbleiben ein an einem bestimmten Ort, bestimmte Ankunftszeiten an einem bestimmten Ort, Zeiten für das Beladen eines Fahrzeuges mit einer Transportsache, Fahrtdauer von einem Ort zum anderen, Standzeiten (z.B. eines Taxis oder Carsharing-Fahrzeugs), Kraftstoffverbrauch, Zeiten für das Laden einer Batterie des jeweiligen Fahrzeugs bewirken.

Die einzelnen lokalen Steuerungsaktionen A1, A2, ..., AN der verschiedenen Fahrzeuge können derart ausgewählt werden, dass die verschiedenen Fahrzeuge evtl. an bestimmten Übergabepunkten derart synchronisiert werden, dass ein Fahrzeugwechsel an einem solchen Übergabepunkt mit einer möglichst geringen Zeitdauer für den Fahrzeugwechsel bzw. das Entladen/Beladen des Fahrzeugs stattfindet. Die kann sinnvoll sein, wenn sich vor allem auf einer bestimmten Teilroute vom Start zum Ziel (z.B. wegen Fahrt durch eine Umweltzone) ein bestimmtes Fahrzeug (z.B. Fahrrad, E-Roller) bewährt haben, aber dieses Fahrzeug bald für einen nächsten Transportauftrag gebraucht wird. Damit kann beispielsweise eine optimale Umweltfreundlichkeit und ggf. möglichst wenig Lärmbelästigung als Optimierungsziel über die Gesamtheit der Fahrzeuge erreicht werden.

Die Aktionsauswahlregel P kann gemäß Techniken des bestärkenden Lernens trainiert sein, die beispielsweise das Maximieren einer Belohnungsfunktion umfassen. Das Maximum der Belohnungsfunktion drückt dann aus, dass das zugehörige Optimierungsziel vollständig erreicht ist. Wenn der Wert der Belohnungsfunktion das Maximum noch nicht erreicht hat, dann ist das zugehörige Optimierungsziel nur zu einem bestimmten Grad angenähert. Die Aktionsauswahlregel kann auf beliebige lokale Zustandsdaten S1, S2, ..., SN der einzelnen Fahrzeuge angewendet werden und ist eingerichtet, für jedes Fahrzeug individuell entsprechende lokale Steuerungsaktionen zu generieren. Die Aktionsauswahlregel P kann beispielsweise als ein entsprechend trainiertes neuronales Netz ausgebildet sein. Zur Anwendbarkeit der Aktionsauswahlregel auf die verschiedenen lokalen Zustandsdaten S1, S2, ..., SN weisen die lokalen Zustandsdaten S1, S2, ..., SN vorzugsweise identische Datenstrukturen auf, so dass die lokalen Zustände der einzelnen Fahrzeuge über eine einheitliche Anzahl verschiedener Zustandsvariablen innerhalb der lokalen Zustandsdaten beschrieben sind.

Die Aktionsauswahlregel P in Kombination mit dem Generierungsmodul für lokale Zustandsdaten LSB und dem Generierungsmodul für globale Steuerungsdaten GAB können dabei eingerichtet sein, innerhalb eines vorbestimmten oder vorbestimmbaren Zeitabschnitts, beispielsweise im Sekundenbereich von üblicherweise 5 bis 10 Sekunden, basierend auf den globalen Zustandsdaten GS entsprechende globale Steuerungsdaten GA zu generieren. Somit kann eine Steuerung und/oder Regelung des Straßenverkehrsnetzes mit seinen Fahrzeugen während des Onlinebetriebs der Fahrzeuge ausgeführt werden. Beispielsweise kann das erfindungsgemäße Verfahren - wie oben beschrieben - in einer vorbestimmten Taktung entsprechend dem vorbestimmten Zeitabschnitt ausgeführt werden, so dass nach einem Transportauftrag und Auswahl der den Transport ausführenden Fahrzeuge, diesen Fahrzeugen im Sekundentakt entsprechende Steuerungsaktionen bzw. Steuerungsdaten bereitgestellt werden können, anhand deren die Fahrzeuge angesteuert werden können, um somit das entsprechende Optimierungsziel zu erreichen oder zumindest anzunähern.

Eine erste Vorrichtung setzt sich im Wesentlichen aus den Komponenten Generierungsmodul für lokale Zustandsdaten LSB, Aktionsauswahlregel P und Generierungsmodul für globale Steuerungsdaten GAB und deren oben beschriebenen Zusammenspiels zusammen und kann eine nicht gezeigte Recheneinheit mit Speicher aufweisen, die dazu eingerichtet ist, das oben beschriebene erfindungsgemäße Verfahren zur rechnergestützten Steuerung und/oder Regelung eines technischen Systems auszuführen.

Eine weitere Vorrichtung, die eine nicht gezeigte Recheneinheit mit Speicher aufweist, die zum Trainieren zumindest einer vorgebbaren oder vorgegebenen Aktionsauswahlregel eingerichtet ist, umfasst im Wesentlichen die Funktionen des unten beschriebenen Reinforcement Learning Optimierungsmodul RLO. In der Anordnung wirken diese beiden Vorrichtungen zusammen.

Das Training der Aktionsauswahlregel P kann auf Daten von realen oder simulierten zeitlichen Sequenzen von globalen Steuerungsaktionen mit bekannten daraus resultierenden globalen Zuständen des technischen Systems basieren. Jedoch wird für das Training bevorzugt, nicht auf reale, sondern auf entsprechenden simulierten Zustandsdaten einer Simulation SIM eines entsprechenden technischen Systems zurückgegriffen. In diesem Fall wird das Training vorzugsweise in einem Offline-Betrieb durchgeführt.

Die Simulation SIM kann hierzu beispielsweise durch ein entsprechendes Simulationsprogramm zur Simulation einer Steuerung und/oder Regelung eines technischen Systems mit den oben bereits beschriebenen Merkmalen ausgeführt werden.

Zum Durchführen des Verfahrens zum Trainieren der Aktionsauswahlregel P werden zu einem Zeitpunkt t zunächst globale Zustandsdaten GS des durch die Simulation SIM simulierten technischen Systems empfangen. Durch das Generierungsmodul für lokale Zustandsdaten LSG werden darauffolgend basierend auf den simulierten globalen Zustandsdaten entsprechende lokale Zustandsdaten S1, S2, ..., SN der Mehrzahl von Fahrzeugen generiert. Durch Anwendung der Aktionsauswahlregel P auf die einzelnen lokalen Zustandsdaten S1, S2, ..., SN werden entsprechende Aktionsauswahlregel A1, A2, ..., AN generiert. Durch das Generierungsmodul für globale Steuerungsdaten GAB werden basierend auf den lokalen Zustandsdaten A1, A2, ..., AN entsprechende globale Steuerungsdaten GA generiert.

Durch Ausführen der in den globalen Steuerungsdaten GA mit den gegebenenfalls enthaltenen lokalen Steuerungsaktionen A1, A2, ..., AN der Mehrzahl von Fahrzeugen durch die Simulation SIM wird das simulierte technische System in einen geänderten Zustand überführt. Verschiedene Zustände des technischen Systems betreffen hierbei zu unterschiedlichen Zeiten bestimmte Zustandsaufnahmen und beschreiben verschiedene Verkehrssituationen, in denen sich beispielsweise die Fahrzeuge des Straßenverkehrs an unterschiedlichen Positionen innerhalb des Straßenverkehrsnetzes befinden.

Hierauf basierend werden zu einem nachfolgenden Zeitpunkt t+1 erneute globale Zustandsdaten GS empfangen und gemäß dem oben beschriebenen Verfahren durch Anwendung der Aktionsauswahlregel P erneut globale Steuerungsdaten GA generiert. Durch Bereitstellung der Steuerungsdaten GA und der damit verbundenen Anwendung derselben wird das simulierte technische System erneut in einen geänderten Zustand gebracht.

Während des wiederholten Ausführens der oben beschriebenen Schritte werden nach jedem Überführen des technischen Systems in einen geänderten Zustand durch Ausführen der zuvor generierten globalen Zustandsdaten GS durch ein Reinforcement Learning Optimierungsmodul RLO eine entsprechende Rückmeldung, auch Reward genannt, einer Belohnungsfunktion R berechnet. Basierend auf dem berechneten Reward der Belohnungsfunktion R werden durch das Reinforcement Learning Optimierungsmodul RLO Parameter der Aktionsauswahlregel P variiert bzw. angepasst. Somit kann nach jedem ausgeführten Durchgang der Erzeugung neuer globaler Zustandsdaten GS und der Überführung des simulierten technischen Systems in einen geänderten Zustand eine Anpassung der Parameter der Aktionsauswahlregel P erfolgen. Alternativ kann eine Anpassung nach einer vordefinierten Anzahl von ausgeführten Durchgängen erfolgen. Die Anpassung der Parameter der Aktionsauswahlregel P erfolgt hierbei gemäß der Zielrichtung einer Maximierung des Returns der Belohnungsfunktion R, gemäß den Grundlagen des bestärkenden Lernens. Das Reinforcement Learning Optimierungsmodul RLO kann hierzu beispielsweise gemäß eines aus dem Stand der Technik bekannten Algorithmus für bestärkendes Lernen ausgebildet sein, der eingerichtet ist, die Parameter der Aktionsauswahlregel P derart zu variieren, dass eine Maximierung des Returns der Belohnungsfunktion R erfolgt. Die Belohnungsfunktion R definiert hierbei, inwieweit das zumindest eine Optimierungsziel erreicht wird. Durch Maximierung des Returns der Belohnungsfunktion R werden die Parameter der Aktionsauswahlregel P derart variiert, so dass die durch die Aktionsauswahlregel P generierten lokalen Steuerungsaktionen A1, A2, ..., AN dazu eingerichtet sind, durch Ausführung der bereitgestellten globalen Steuerungsdaten für eine globale Steuerungsaktion bzw. der damit verbundenen Ansteuerung der Fahrzeuge eine Erfüllung der Optimierungsziele zu bewirken.

Alternativ kann das Training der Aktionsauswahlregel P auch auf realen Zustandsdaten eines tatsächlichen Straßenverkehrs trainiert werden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Die Implementierung der vorstehend beschriebenen Prozesse oder Verfahrensabläufe/-schritte kann anhand von Instruktionen erfolgen, die auf computerlesbaren Speichermedien oder in flüchtigen Computerspeichern (im Folgenden zusammenfassend als computerlesbare Speicher bezeichnet) vorliegen. Computerlesbare Speicher sind beispielsweise flüchtige Speicher wie Caches, Puffer oder RAM sowie nichtflüchtige Speicher wie Wechseldatenträger, Festplatten, usw.

Die vorstehend beschriebenen Funktionen oder Schritte können dabei in Form zumindest eines Instruktionssatzes in/auf einem computerlesbaren Speicher vorliegen. Die Funktionen oder Schritte sind dabei nicht an einen bestimmten Instruktionssatz oder an eine bestimmte Form von Instruktionssätzen oder an ein bestimmtes Speichermedium oder an einen bestimmten Prozessor oder an bestimmte Ausführungsschemata gebunden und können durch Software, Firmware, Microcode, Hardware, Prozessoren, integrierte Schaltungen usw. im Alleinbetrieb oder in beliebiger Kombination ausgeführt werden. Dabei können verschiedenste Verarbeitungsstrategien zum Einsatz kommen, beispielsweise serielle Verarbeitung durch einen einzelnen Prozessor oder Multiprocessing oder Multitasking oder Parallelverarbeitung usw.

Die Instruktionen können in lokalen Speichern abgelegt sein, es ist aber auch möglich, die Instruktionen auf einem entfernten System abzulegen und darauf via Netzwerk zuzugreifen.

Unter "rechner-/computergestützt" bzw. "computerimplementiert" kann im Zusammenhang mit der Erfindung beispielsweise eine Implementierung des Verfahrens verstanden werden, bei dem insbesondere ein Prozessor bzw. eine Recheneinheit, der Teil der (Steuerungs)vorrichtung bzw. -einheit und/oder eines Computers und/oder eines oder mehrerer Dienste in einer Rechnerwolke (Cloud) eines Diensterbringers sein kann, mindestens einen Verfahrensschritt des Verfahrens ausführt.

Sofern es in der nachfolgenden Beschreibung nicht anders angegeben ist, beziehen sich die Begriffe "abbilden", "nachbilden", "empfangen", "anwenden", "ausgeben", "bereitstellen" und dergleichen vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt oder vorliegen können.

Der Begriff "Prozessor", "zentrale Signalverarbeitung", "Steuereinheit" oder "Datenauswertemittel", wie hier verwendet, umfasst Verarbeitungsmittel im weitesten Sinne, also beispielsweise Server, Universalprozessoren, Grafikprozessoren, digitale Signalprozessoren, anwendungsspezifische integrierte Schaltungen (ASICs), programmierbare Logikschaltungen wie FPGAs, diskrete analoge oder digitale Schaltungen und beliebige Kombinationen davon, einschließlich aller anderen dem Fachmann bekannten oder in Zukunft entwickelten Verarbeitungsmittel. Prozessoren können dabei aus einer oder mehreren Vorrichtungen bzw. Einrichtungen bzw. Einheiten bestehen. Besteht ein Prozessor aus mehreren Vorrichtungen, können diese zur parallelen oder sequentiellen Verarbeitung bzw. Ausführung von Instruktionen ausgelegt bzw. konfiguriert sein. Unter einer "Speichereinheit" kann im Zusammenhang mit der Erfindung beispielsweise ein Speicher in Form von Arbeitsspeicher (engl. Random-Access Memory, RAM) oder eine Festplatte verstanden werden.

## Patentansprüche

1. Verfahren zur rechnergestützten Steuerung und/oder Regelung eines technischen Systems, das eine Umgebung eines Straßenverkehrsnetzes, in welcher sich mindestens zwei richtungsfrei bewegliche Fahrzeuge befinden, repräsentiert und dessen Verhalten für mehrere Zeitpunkte jeweils durch einen globalen Zustand des technischen Systems und durch eine in diesem Zustand am technischen System durchführbare globale Steuerungsaktion charakterisiert wird, wobei jeder Zustand durch Zustandsdaten beschrieben wird, aufweisend folgende Verfahrensschritte:
- Empfangen von globalen Zustandsdaten, wobei die globalen Zustandsdaten (GS) einen globalen Zustand der Umgebung mit einer Mehrzahl solcher Fahrzeuge zu einem Zeitpunkt t beschreiben;
- Ermitteln eines Satzes von lokalen Zustandsdaten (S1, S2, ..., SN) der Mehrzahl von Fahrzeugen basierend auf den globalen Zustandsdaten (GS), wobei lokale Zustandsdaten eines Fahrzeugs einen Zustand des Fahrzeugs innerhalb der Umgebung beschreiben;
- Ermitteln eines optimierten Satzes von lokalen Steuerungsaktionen (A1, A2, ..., AN) für die Mehrzahl von Fahrzeugen basierend auf dem Satz von lokalen Zustandsdaten (S1, S2, ..., SN) der Mehrzahl von Fahrzeugen durch Ausführen zumindest einer vorgebbaren oder vorgegebenen Aktionsauswahlregel (P) auf die lokalen Zustandsdaten (S1, S2, ..., SN), wobei lokale Steuerungsaktionen (A1, A2, ..., AN) eines Fahrzeugs eine individuelle Ansteuerung des jeweiligen Fahrzeugs beschreiben;
- Generieren von globalen Steuerungsdaten (GA) für eine globale Steuerungsaktion, welche basierend auf dem optimierten Satz von lokalen Steuerungsaktionen (A1, A2, ..., AN) und unter Berücksichtigung wenigstens eines in Hinblick auf die Umgebung gerichteten Optimierungsziels ermittelt wird; und
- Bereitstellen der globalen Steuerungsdaten (GA) am technischen System zur Ausführung der Steuerung und/oder Regelung, wobei die Steuerung und/oder Regelung in Abhängigkeit vom globalen Zustand des technischen Systems zum Zeitpunkt t die nachfolgend am technischen System durchzuführende globale Steuerungsaktion angibt und die Durchführung dieser globalen Steuerungsaktion in einen geänderten globalen Zustand des technischen Systems zu einem nachfolgenden Zeitpunkt t+1 führt und eine Annäherung an das wenigstens einen Optimierungsziels oder dessen Erfüllung bewirkt.

2. Verfahren nach dem vorhergehenden Anspruch, **dadurch gekennzeichnet, dass** das technische System als datengetriebenes Modell des technischen Systems und/oder ein physikalisches System ausgebildet ist.

3. Verfahren nach einem der vorhergehenden Ansprüche, **dadurch gekennzeichnet, dass** das datengetriebene Modell ein das technische System nachbildendes Simulationsmodell ist, welches auf Basis von Daten von bekannten realen oder simulierten zeitlichen Sequenzen von globalen Steuerungsaktionen mit bekannten daraus resultierenden globalen Zuständen des technischen Systems modelliert und/oder mit Hilfe eines neuronalen Netzes angelernt ist.

4. Verfahren nach einem der vorhergehenden Ansprüche, **dadurch gekennzeichnet, dass** die vorgebbare oder vorgegebene Aktionsauswahlregel (P) auf Basis von Daten von bekannten realen oder simulierten zeitlichen Sequenzen von globalen Steuerungsaktionen mit bekannten daraus resultierenden globalen Zuständen des technischen Systems mit Hilfe von Techniken des bestärkenden Lernens trainiert wird oder trainiert ist.

5. Verfahren nach dem vorhergehenden Anspruch, **dadurch gekennzeichnet, dass** das Training der Aktionsauswahlregel (P) eine Optimierung einer Belohnungsfunktion umfasst, wobei der Wert der Belohnungsfunktion den Grad des Erreichens des zugehörigen Optimierungsziels ausdrückt.

6. Verfahren nach einem der vorhergehenden Ansprüche, **dadurch gekennzeichnet**, die globalen Steuerungsdaten den optimierten Satz von lokalen Steuerungsaktionen vollständig oder teilweise umfassen.

7. Vorrichtung mit einer Recheneinheit zur Steuerung und/oder Regelung eines technischen Systems, das eine Umgebung eines Straßenverkehrsnetzes mit mindestens zwei sich richtungsfrei beweglichen Fahrzeugen repräsentiert und dessen Verhalten für mehrere Zeitpunkte jeweils durch einen globalen Zustand des technischen Systems und durch eine in diesem Zustand am technischen System durchführbare globale Steuerungsaktion charakterisiert ist, wobei jeder Zustand durch Zustandsdaten beschrieben ist, wobei die Recheneinheit dazu eingerichtet ist, die folgenden Verfahrensschritte auszuführen:
- Empfangen von globalen Zustandsdaten, wobei die globalen Zustandsdaten (GS) einen globalen Zustand der Umgebung mit einer Mehrzahl solcher Fahrzeuge zu einem Zeitpunkt t beschreiben;
- Ermitteln eines Satzes von lokalen Zustandsdaten (S1, S2, ..., SN) der Mehrzahl von Fahrzeugen basierend auf den globalen Zustandsdaten (GS), wobei lokale Zustandsdaten eines Fahrzeugs einen Zustand des Fahrzeugs innerhalb der Umgebung beschreiben;
- Ermitteln eines optimierten Satzes von lokalen Steuerungsaktionen (A1, A2, ..., AN) für die Mehrzahl von Fahrzeugen basierend auf dem Satz von lokalen Zustandsdaten (S1, S2, ..., SN) der Mehrzahl von Fahrzeugen durch Ausführen zumindest einer vorgebbaren oder vorgegebenen Aktionsauswahlregel (P) auf die lokalen Zustandsdaten (S1, S2, ..., SN), wobei lokale Steuerungsaktionen (A1, A2, ..., AN) eines Fahrzeugs eine individuelle Ansteuerung des jeweiligen Fahrzeugs beschreiben;
- Generieren von globalen Steuerungsdaten (GA) für eine globale Steuerungsaktion, welche basierend auf dem optimierten Satz von lokalen Steuerungsaktionen (A1, A2, ..., AN) und unter Berücksichtigung wenigstens eines in Hinblick auf die Umgebung gerichteten Optimierungsziels ermittelt wird; und
- Bereitstellen der globalen Steuerungsdaten (GA) am technischen System zur Ausführung der Steuerung und/oder Regelung, wobei die Steuerung und/oder Regelung in Abhängigkeit vom globalen Zustand des technischen Systems zum Zeitpunkt t die nachfolgend am technischen System durchzuführende globale Steuerungsaktion angibt und die Durchführung dieser globalen Steuerungsaktion in einen geänderten globalen Zustand des technischen Systems zu einem nachfolgenden Zeitpunkt t+1 führt und eine Annäherung an das wenigstens eine Optimierungsziels oder dessen Erfüllung bewirkt.

8. Vorrichtung mit einer Recheneinheit zum Trainieren zumindest einer vorgebbaren oder vorgegebenen Aktionsauswahlregel (P), wobei das technische System eine Umgebung eines Straßenverkehrsnetzes, in welcher sich mindestens zwei richtungsfrei bewegliche Fahrzeuge befinden, repräsentiert und dessen Verhalten für mehrere Zeitpunkte jeweils durch einen globalen Zustand des technischen Systems und durch eine in diesem Zustand am technischen System durchführbare globale Steuerungsaktion charakterisiert ist, wobei jeder Zustand durch Zustandsdaten beschrieben ist, wobei die Recheneinheit dazu eingerichtet ist, die folgenden Verfahrensschritte auszuführen:
- Trainieren der Aktionsauswahlregel (P) auf Basis von Daten von realen oder simulierten zeitlichen Sequenzen von globalen Steuerungsaktionen mit bekannten daraus resultierenden globalen Zuständen des technischen Systems mit Hilfe von Techniken des bestärkenden Lernens, das eine Optimierung einer Belohnungsfunktion unter Berücksichtigung wenigstens eines in Hinblick auf die Umgebung gerichteten Optimierungsziels umfasst.

9. Anordnung zur rechnergestützten Steuerung und/oder Regelung eines technischen Systems, das eine Umgebung eines Straßenverkehrsnetzes mit mindestens zwei sich richtungsfrei beweglichen Fahrzeugen repräsentiert, umfassend die Vorrichtungen aus Anspruch 7 und 8, welche derart zusammenwirken können, dass globale Steuerungsdaten (GA) am technischen System zur Ausführung der Steuerung und/oder Regelung bereitgestellt werden können, welche durch ihre Anwendung in einen geänderten globalen Zustand des technischen Systems führen und eine Annäherung an das wenigstens eine Optimierungsziels oder dessen Erfüllung bewirken können.

10. Computerprogrammprodukt umfassend ein nichtflüchtiges Speichermedium, auf dem ein ladbarer und ausführbarer Programmkode oder verteilt ladbare und ausführbare Programmkodemodule gespeichert sind, welches oder welche das Verfahren nach einem der vorhergehenden Verfahrensansprüchen in einer Prozessoreinheit der Anordnung nach dem vorhergehenden Anspruch oder in mehreren Prozessoreinheiten jeweils der Vorrichtungen nach den vorhergehenden Vorrichtungsansprüchen ausführt.
